Europäisches Patentamt

European Patent Office

Office européen des brevets

(19)

(11) EP 0 746 536 B1

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(21) Anmeldenummer: **95910415.9**

(22) Anmeldetag: **20.02.1995**

(51) Int Cl.[7]: **C05G 3/08**

(86) Internationale Anmeldenummer:
**PCT/DE95/00243**

(87) Internationale Veröffentlichungsnummer:
**WO 95/22514 (24.08.1995 Gazette 1995/36)**

(54) **WIRKSTOFFKOMBINATIONEN ZUR HEMMUNG BZW. REGELUNG DER NITRIFIKATION VON AMMONIUMSTICKSTOFF IN KULTURBÖDEN UND SUBSTRATEN**

COMBINATIONS OF ACTIVE SUBSTANCES FOR INHIBITING OR REGULATING NITRIFICATION OF AMMONIACAL NITROGEN IN ARABLE LANDS OR SUBSTRATES

COMBINAISONS DE PRINCIPES ACTIFS UTILISEES POUR INHIBER OU REGULER LA NITRIFICATION D'AZOTE AMMONIACAL DANS DES SOLS ET SUBSTRATS CULTIVABLES

(84) Benannte Vertragsstaaten:
**AT BE CH DK ES FR GB GR IE IT LI NL PT SE**

(30) Priorität: **21.02.1994 DE 4405393**

(43) Veröffentlichungstag der Anmeldung:
**11.12.1996 Patentblatt 1996/50**

(73) Patentinhaber: **SKW STICKSTOFFWERKE PIESTERITZ GmbH**
**06886 Lutherstadt Wittenberg (DE)**

(72) Erfinder:
• **GRABARSE, Margrit**
**D-04687 Seelingstädt (DE)**
• **LANG, Sieghard**
**D-04441 Gunnersdorf (DE)**
• **MICHEL, Hans-Jürgen**
**D-04827 Machern (DE)**
• **WOZNIAK, Hartmut**
**D-04451 Cunnersdorf (DE)**

(74) Vertreter: **HOFFMANN - EITLE**
**Patent- und Rechtsanwälte**
**Arabellastrasse 4**
**81925 München (DE)**

(56) Entgegenhaltungen:
**EP-A- 0 289 757        WO-A-93/21134**

• **DATABASE WPI Section Ch, Week 8605 Derwent Publications Ltd., London, GB; Class C03, AN 86-029244 & DD,A,227 957 ( VEB AGROCH PIESTERI) , 2.Oktober 1985 in der Anmeldung erwähnt**

Bemerkungen:
Die Akte enthält technische Angaben, die nach dem Eingang der Anmeldung eingereicht wurden und die nicht in dieser Patentschrift enthalten sind.

**Beschreibung**

Der Erfindung liegt somit die Aufgabe zugrunde, Wirkstoffkombination zu entwickeln, die eine erhöhte nitrifikationshemmende Wirkung aufweisen und damit eine Reduzierung der Aufwandmenge ermöglichen und phytotoxisch unbedenklich sind.

Die Aufgabe wird dadurch gelöst, dass zur Hemmung bzw. Regelung der Nitrifikation von Ammoniumstickstoff in Kulturböden und Substraten, Wirkstoffkombinationen eingesetzt werde, die

(a) mindestens ein substituiertes Pyrazol, dessen Salze oder Metallkomplexe (P) und

(b) Dicyandiamid (DCD) und

(c) mindestens eine der folgenden Verbindungen (X)

    Ammoniumthiosulfat

    Biguanid

    Ammoniumrhodanid

enthalten, wobei das Mischungsverhältnis von DCD:X zwischen 4:1 bis 1:4 liegt und das Mischungsverhältnis von (DCD+X):P 75:1 bis 1:1 beträgt.

Die erfindungsgemäßen Wirkstoffkombinationen entfalten bei der Hemmung bzw. Regelung der Nitrifikation in Kulturböden und Substraten starke synergistische Effekte und induzieren damit gegenüber den Kombinationen aus zwei Wirkstoffkomponenten einen deutlichen Wirkungsanstieg, der im Ergebnis der damit möglichen verbesserten Ausnutzung des Düngemittelstickstoffs im Boden durch Pflanzen auch zu einer erhöhten Biomasseproduktion führen kann.

Die Wirkstoffkombinationen sind ökologisch vorteilhaft und kostengünstig einsetzbar.

Sie sind vorzugsweise in einer geeigneten Formulierung wie Lösung, Spritzpulver, Suspensions- oder Emulsionskonzentrat, sowohl allein als auch mit festen und flüssigen amid- und/oder ammoniumhaltigen mineralischen und organischen Düngern applikabel.

Die erfindungsgemäßen Kombinationen können vor, mit oder nach der Düngung zur Anwendung kommen und gegebenenfalls gemeinsam mit anderen Agrochemikalien wie Pflanzenschutz- und Schädlingsbekämpfungsmitteln, pflanzlichen Wachstumsregulatoren oder Bodenverbesserungsmitteln sowie in Kombination mit anderen agrotechnischen Maßnahmen appliziert werden.

Die vorliegende Erfindung betrifft Wirkstoffkombinationen zur Hemmung bzw. Regelung der Nitrifikation von Ammoniumstickstoff in Kulturböden und Substraten.

Es ist bekannt, daß Ammoniumstickstoff im Boden rasch durch eine mikrobielle Oxidation über Nitrit zu Nitrat oxidiert wird. Die Nitrationen können von den Sorptionsträgern des Bodens nicht sorptiv gebunden werden, so daß sie ausgewaschen werden können und damit zur Eutrophierung des Grund- und Oberflächenwassers führen. Andererseits führen hohe Nitrit- und Nitratgehalte im Boden nicht selten zu einer toxikologisch bedenklichen Nitratanreicherung in Kulturpflanzen. Außerdem treten vor allem unter anaeroben Bedingungen durch Denitrifikation (chemische und mikrobielle Reduktion des Nitrats) gasförmige Stickstoffverluste auf, die vor allem in Form von Distickstoffoxid die Atmosphäre belasten.

Durch eine Hemmung bzw. Regelung der Nitrifikation vermittels geeigneter chemischer Substanzen kann die Ausnutzung des Düngemittelstickstoffs durch die Pflanze erheblich verbessert werden.

Bekannt sind u. a. Wirkstoffkombinationen, bestehend aus Einschmelzungen von 4-Amino-1,2,4-triazol, Biuret, Dicyandiamid in Harnstoff/Thioharnstoff- sowie Harnstoff/Cyanoguanidinmischungen (DD 227957).

Nachteile für die Erzielung einer den praktischen Erfordernissen entsprechenden Nitrifikationshemmung der im DD-Patent 227957 beschriebenen Mittel ergeben sich aus der zum Teil zu geringen Wirksamkeit und den daraus resultierenden hohen Aufwandmengen sowie der Tatsache, daß während des Schmelzprozesses chemische Reaktionen induziert werden können, die gleichfalls einer sicheren und problemlosen Anwendung negativ gegenüberstehen. Dadurch bedingt treten teilweise Phytotoxizitätserscheinungen an Kulturpflanzenbeständen auf Andererseits induzieren zu hohe Aufwandmengen nicht selten Rückstandsprobleme, vorzugsweise in Kulturen mit kurzer Vegetationszeit.

Des weiteren sind bereits Nitrifikationsinhibitorkombinationen aus Pyrazolderivaten und

Dicyandiamid (DD 222471, WO 93/21134) sowie aus Dicyandiamid und Ammoniumthiosulfat (EP 0289757) bekannt.

Nachteilig bei diesen Wirkstoffkombinationen ist vor allem die zu geringe Wirksamkeit und die damit erforderlichen hohen Aufwandmengen.

Die Dosis ist vom Mischungsverhältnis abhängig und beträgt mindestens 1 kg Aktivsubstanz/ha bzw. bei einer gemeinsamen Applikation mit mineralischen Düngemitteln mindestens 0,5 Gew.-% Aktivsubstanz bezogen auf den Gehalt an reduziertem Stickstoff.

**Beispiele**

In Bodenmodellversuchen wurde die Wirksamkeit der erfindungsgemäßen Wirkstoflkombinationen untersucht und mit den jeweiligen Zweierkombinationen verglichen.

Tabelle 1

| Geprüfte Wirkstoffe | |
|---|---|
| Wirkstoff | Abkürzung |
| Dicyandiamid | DCD |
| Ammoniumthiosulfat | ATS |
| Ammoniumrhodanid | AR |
| 3-Methylpyrazol | MP |
| 1-Guanyl-3-methylpyrazol x $HNO_3$ | GMP x $NO_3$ |
| Mangan-Methylpyrazolkomplex$[Mn(MP)_2(H_2O)]Cl_2$ | Mn/MP |

**Methode zur Bestimmung der Nitrifikationshemmung**

100 g lufttrockener, auf $\leq$ 2 mm abgesiebter Boden (sandiger Lehm; pH-Wert = 6,1; organische Substanz = 1,19 %; T-Wert = 0,5 mval/100 g Boden) wurden mit 10 mg Ammoniumsulfat-N und gegebenenfalls mit der entsprechenden Wirkstoffmenge innig vermischt, auf 50 % der maximalen Wasserkapazität eingestellt und anschließend in 250 ml Polyethylenflaschen überführt, die letztlich mit einer dünnen Polyethylenfolie verschlossen wurden.
Die Inkubation erfolgte in einem klimatisierten Dunkelraum bei 20 $\pm$ 2 °C. Zu jeder Probenahme (Zeitintervall = 7 d) entnahm man 5,75 g Boden (= 5 g lufttrockener Boden) und extrahierte ihn mit 50 ml 1 n KCl-Lösung (1 Stunde Schütteln in einer Überkopfschüttelmaschine).
Nach entsprechender Aufbereitung des Extraktes wurde der Gehalt an $NH_4$-N und $NO_3$-N mittels Analysenautomat bestimmt.
Die Berechnung der Hemmwirkung erfolgte mit nachstehender Gleichung.

$$\text{Hemmung in \%} = \frac{K - W}{K - B} \cdot 10$$

K = Nitratgehalt der Bodenprobe mit N-Dünger ohne Wirkstoff
W = Nitratgehalt der Bodenprobe mit N-Dünger und Wirkstoff
B = Nitratgehalt der Bodenprobe

**Mischungsverhältnisse und Konzentrationen**

Die Summe der Wirkstoffdosis betrug für die erfindungsgemäßen Wirkstoffkombinationen grundsätzlich 3 ppm. Das Mischungsverhältnis von [DCD + X] : Pyrazolderivat wurde mit 25 : 1 konstant gehalten, während man das Verhältnis DCD : X mit 4 : 1; 3 : 1; 2 : 1; 1 : 1; 1 : 2; 1 : 3 und 1 : 4 variierte.
Daraus leiten sich auch die anteiligen Konzentrationen der Wirkstoffkomponenten ab.

Tabelle 2

| Dreierkombination | | | | | |
|---|---|---|---|---|---|
| Bezeichnung des Mischungsverhältnisses | Mischungsverhältnis DCD : X | Anteilige Konzentration in ppm | | | Summe der Konzentration in ppm |
| | | DCD | X | P | |
| 1 | 4 : 1 | 2,308 | 0,577 | 0,115 | 3 |
| 2 | 3 : 1 | 2,163 | 0,721 | 0,115 | 3 |
| 3 | 2 : 1 | 1,923 | 0,962 | 0,115 | 3 |
| 4 | 1 : 1 | 1,442 | 1,442 | 0,115 | 3 |
| 5 | 1 : 2 | 0,962 | 1,923 | 0,115 | 3 |
| 6 | 1 : 3 | 0,721 | 2,163 | 0,115 | 3 |

Tabelle 2   (fortgesetzt)

| Dreierkombination | | | | |
| --- | --- | --- | --- | --- |
| Bezeichnung des Mischungsverhältnisses | Mischungsverhältnis DCD : X | Anteilige Konzentration in ppm | | Summe der Konzentration in ppm |
| | | DCD | X | P | |
| 7 | 1 : 4 | 0,577 | 2,308 | 0,115 | 3 |

Tabelle 3

| Zweierkombinationen | | | |
| --- | --- | --- | --- |
| Bei den Zweierkombinationen wurde vergleichsweise nur das Mischungsverhältnis DCD : X = 1 : 1 einbezogen. Ansonsten entsprachen die Relationen denen der erfindungsgemäßen Wirkstoffkombination. | | | |
| Bezeichnung des Mischungsverhältnisses | Kombination | Anteilige Konzentration in ppm | Summe der Konzentration in ppm |
| 4/1 | DCD + X | 1,442 + 1,442 | 2,884 |
| 4/2 | DCD + P | 1,442 + 0,115 | 1,557 |
| 4/3 | X + P | 1,442 + 0,115 | 1,557 |

**Berechnung und Bewertung der Kombinationswirkung**

Die Berechnung der Kombinationswirkung erfolgte nach COLBY (Weeds 15 (1967), 20-22). Nach dieser Methode rechnet man mit den Komplementen der Wirkung (W').

$$W' = 100 - \text{Hemmwirkung in \% (W)}$$

Das Komplement der theoretischen Hemmwirkung der Kombination bei additiver Wirkung (E) errechnet sich nach folgender Gleichung:

$$E = \frac{x_1 + y_1 + z_1}{100^{n-1}}$$

$x_1$ = W' der Substanz A mit der Dosis $C_A$
$y_1$ = W' der Substanz B mit der Dosis $C_B$
$z_1$ = W' der Substanz C mit der Dosis $C_C$
n = Anzahl der Kombinationspartner
$E_R$ = $W'_{real}$ der Kombination im Experiment

Die Kombinationseffekte sind wie folgt definiert:

$E > E_R$ = Synergismus
$E < E_R$ = Antagonismus
$E = E_R$ = Additivwirkung

Zur übersichtlichen Quantifizierung der Kombinationswirkung wurden die Wirkungsfaktoren (WF) ermittelt.

$$WF = \frac{W_{real}}{W_{theoretisch}}$$

WF > 1 = Synergismus
WF < 1 = Antagonismus
WF = 1 = Additivwirkung

$$W_{real} = 100 - E_R$$
$$W_{theoretisch} = 100 - E$$

**Wirkung der Einzelkomponenten**

Die Wirkung der Einzelkomponenten wurde mittels linearer Regression aus 4 Einzelwerten der im Experiment gefundenen Hemmwirkungen bestimmt.

| Konzentrationsbereich der Wirkstoffe DCD und X | 0,5 ppm bis 2,5 ppm |
|---|---|
| Konzentrationsbereich der untersuchten Pyrazole | 0,075 ppm bis 0,5 ppm |

Aus Gründen der Zweckmäßigkeit und Übersichtlichkeit wurden für die Einzelkomponenten nur die Regressionsgleichungen und die in der Berechnung verwendeten Regressionswerte angegeben.

Tabelle 4

| Wirkstoff | Regressionsgleichung |
|---|---|
| DCD | $y = 20,44 + 5,83\ x$ |
| ATS | Wirkung am 28. Tag nach der Applikation in allen anteiligen Konzentrationen = 0 |
| AR | Wirkung am 28. Tag nach der Applikation in allen anteiligen Konzentrationen = 0 |
| MP | $y = 17,6 + 162,6\ x$ |
| GMP x $NO_3$ | $y = 26,7 + 38,1\ x$ |
| Mn/MP | $y = 17,7 + 81,7\ x$ |

Tabelle 5

| Wirkstoff | Hemmung nach 28 Tagen in % Konzentration in ppm | | | | | | | |
|---|---|---|---|---|---|---|---|---|
| | 0,115 | 0,577 | 0,721 | 0,962 | 1,442 | 1,923 | 2,163 | 2,308 |
| DCD | - | 23,8 | 24,6 | 26,0 | 28,8 | 31,7 | 33,1 | 33,9 |
| ATS | - | 0 | 0 | 0 | 0 | 0 | 0 | 0 |
| AR | - | 0 | 0 | 0 | 0 | 0 | 0 | 0 0 |
| MP | 36,3 | - | - | - | - | - | - | - |
| GMPx$NO_3$ | 31,1 | - | - | - | - | - | - | - |
| Mn/MP | 27,1 | - | - | - | - | - | - | - |

Tabelle 6

| **Kombinationswirkung der Zweierkombinationen 28 Tage nach der Applikation** | | | | |
|---|---|---|---|---|
| Kombination | $W_{real}$ % Hemmung | E | ER | WF |
| DCD + ATS | 29,1 | 71,2 | 70,9 | 1,01 |
| DCD + AR | 26,4 | 71,2 | 73,6 | 0,92 |
| DCD + MP | 69,4 | 45,4 | 30,6 | 1,27 |
| DCD + GMP x $NO_3$ | 67,3 | 49,1 | 32,7 | 1,32 |
| DCD + Mn/MP | 62,4 | 51,9 | 37,6 | 1,30 |
| ATS + MP | 34,7 | 63,7 | 65,3 | 0,96 |
| AR+MP | 35,2 | 63,7 | 64,8 | 0,97 |

Tabelle 7

| **Wirksamkeit der erfindungsgemäßen Wirkstoffkombinationen** | | | | | |
|---|---|---|---|---|---|
| Kombination | Mischungsverhältnis DCD:X | $W_{real}$ % Hemmung | E | $E_R$ | WF |
| DCD + ATS + MP | 1 | 95,6 | 42,1 | 4,4 | 1,65 |

Tabelle 7   (fortgesetzt)

| Wirksamkeit der erfindungsgemäßen Wirkstoffkombinationen | | | | | |
|---|---|---|---|---|---|
| Kombination | Mischungsverhältnis DCD:X | $W_{real}$ % Hemmung | E | $E_R$ | WF |
| | 2 | 95,5 | 42,6 | 4,5 | 1,66 |
| | 3 | 95,5 | 43,5 | 4,5 | 1,69 |
| | 4 | 94,1 | 45,4 | 5,9 | 1,72 |
| | 5 | 90,9 | 47,1 | 9,1 | 1,72 |
| | 6 | 83,1 | 48,0 | 16,9 | 1,60 |
| | 7 | 72,2 | 48,5 | 27,8 | 1,40 |
| DCD + AR + MP | 1 | 86,5 | 42,1 | 13,5 | 1,49 |
| | 2 | 84,0 | 42,6 | 16,0 | 1,46 |
| | 3 | 84,5 | 43,5 | 15,5 | 1,50 |
| | 4 | 90,1 | 45,4 | 9,9 | 1,65 |
| | 5 | 72,6 | 47,1 | 27,4 | 1,37 |
| | 6 | 67,9 | 48,0 | 32,1 | 1,31 |
| | 7 | 49,2 | 48,5 | 50,8 | 0,96 |

Tabelle 8 dient dem Nachweis, daß die erfindungsgemäßen Kombinationen in ihrer Wirksamkeit der Zweierkombination überlegen sind.

Tabelle 8

| Vergleich der Wirksamkeit der erfindungsgemäßen Mittel mit den entsprechenden Zweierkombinationen | | |
|---|---|---|
| Kombination | Mischungsverhältnis | WF |
| DCD + ATS + MP | 4 | 1,72 |
| DCD + ATS | 4/1 | 1,01 |
| DCD + MP | 4/2 | 1,27 |
| ATS + MP | 4/3 | 0,96 |
| DCD + AR + MP | 4 | 1,65 |
| DCD + AR | 4/1 | 0,92 |
| DCD + MP | 4/2 | 1,27 |
| AR + MP | 4/3 | 0,97 |

Tabelle 5

| Wirkstoff | Hemmung nach 28 Tagen in % | | | | | | | |
|---|---|---|---|---|---|---|---|---|
| | Konzentration in ppm | | | | | | | |
| | 0,115 | 0,577 | 0,721 | 0,962 | 1,442 | 1,923 | 2,163 | 2,308 |
| DCD | - | 23,8 | 24,6 | 26,0 | 28,8 | 31,7 | 33,1 | 33,9 |
| GTH | - | 1,7 | 3,1 | 5,5 | 10,3 | 15,1 | 17,5 | 19,0 |
| TH | - | 0 | 0 | 0 | 0 | 0 | 0 | 0 |
| ATS | - | 0 | 0 | 0 | 0 | 0 | 0 | 0 |
| AR | - | 0 | 0 | 0 | 0 | 0 | 0 | 0 |
| MP | 36,3 | - | - | - | - | - | - | - |
| GMP x $NO_3$ | 31,1 | - | - | - | - | - | - | - |
| Mn/MP | 27,1 | - | - | - | - | - | - | - |

Tabelle 6:

| Kombinationswirkung der Zweierkombinationen 28 Tage nach der Applikation | | | | |
|---|---|---|---|---|
| Kombination | $W_{real}$ % Hemmung | E | $E_R$ | WF |
| DCD + GTH | 39,2 | 63,9 | 60,8 | 1,09 |
| DCD + TH | 30,0 | 71,2 | 70,0 | 1,04 |
| DCD + ATS | 29,1 | 71,2 | 70,9 | 1,01 |
| DCD + AR | 26,4 | 71,2 | 73,6 | 0,92 |
| DCD + MP | 69,4 | 45,4 | 30,6 | 1,27 |
| DCD + GMP x $NO_3$ | 67,3 | 49,1 | 32,7 | 1,32 |
| DCD + Mn/MP | 62,4 | 51,9 | 37,6 | 1,30 |
| GTH + MP | 48,1 | 57,1 | 51,9 | 1,12 |
| GTH + GMP x NO3 | 45,8 | 61,8 | 54,2 | 1,20 |
| GTH + Mn/MP | 37,9 | 65,4 | 62,1 | 1,10 |
| TH + MP | 31,9 | 63,7 | 68,1 | 0,88 |
| ATS + MP | 34,7 | 63,7 | 65,3 | 0,96 |
| AR + MP | 35,2 | 63,7 | 64,8 | 0,97 |

Tabelle 7:

| Wirksamkeit der erfindungsgemäßen Wirkstoflkombinationen | | | | | |
|---|---|---|---|---|---|
| Kombination | Mischungsverhältnis DCD:X | $W_{real}$ % Hemmung | E | $E_R$ | WF |
| DCD+GTH+MP | 1 | 79,9 | 41,4 | 20,1 | 1,36 |
| | 2 | 84,3 | 41,3 | 15,7 | 1,44 |
| | 3 | 82,8 | 41,1 | 17,2 | 1,41 |
| | 4 | 92,1 | 40,7 | 7,9 | 1,55 |
| | 5 | 79,0 | 40,0 | 21,0 | 1,32 |
| | 6 | 78,6 | 39,6 | 21,4 | 1,30 |
| | 7 | 70,3 | 39,3 | 29,7 | 1,16 |
| DCD+TH+MP | 1 | 86,2 | 42,1 | 13,8 | 1,49 |
| | 2 | 85,0 | 42,6 | 15,0 | 1,48 |
| | 3 | 80,2 | 43,5 | 19,8 | 1,42 |
| | 4 | 78,0 | 45,4 | 22,0 | 1,43 |
| | 5 | 72,4 | 47,1 | 27,6 | 1,37 |
| | 6 | 67,9 | 48,0 | 32,1 | 1,31 |
| | 7 | 58,4 | 48,5 | 41,6 | 1,13 |
| DCD+ATS+MP | 1 | 95,6 | 42,1 | 4,4 | 1,65 |
| | 2 | 95,5 | 42,6 | 4,5 | 1,66 |
| | 3 | 95,5 | 43,5 | 4,5 | 1,69 |
| | 4 | 94,1 | 45,4 | 5,9 | 1,72 |
| | 5 | 90,9 | 47,1 | 9,1 | 1,72 |
| | 6 | 83,1 | 48,0 | 16,9 | 1,60 |
| | 7 | 72,2 | 48,5 | 27,8 | 1,40 |
| DCD+AR+MP | 1 | 86,5 | 42,1 | 13,5 | 1,49 |
| | 2 | 84,0 | 42,6 | 16,0 | 1,46 |
| | 3 | 84,5 | 43,5 | 15,5 | 1,50 |
| | 4 | 90,1 | 45,4 | 9,9 | 1,65 |
| | 5 | 72,6 | 47,1 | 27,4 | 1,37 |
| | 6 | 67,9 | 48,0 | 32,1 | 1,31 |
| | 7 | 49,2 | 48,5 | 50,8 | 0,96 |

Tabelle 7: (fortgesetzt)

| Wirksamkeit der erfindungsgemäßen Wirkstoflkombinationen | | | | | |
|---|---|---|---|---|---|
| Kombination | Mischungsverhältnis DCD:X | $W_{real}$ % Hemmung | E | $E_R$ | WF |
| DCD+GTH+ | 1 | 93,7 | 44,8 | 6,3 | 1,70 |
| GMPxNO$_3$ | 2 | 90,3 | 44,7 | 9,7 | 1,63 |
| | 3 | 91,5 | 44,5 | 8,5 | 1,65 |
| | 4 | 97,0 | 44,0 | 3,0 | 2,20 |
| | 5 | 83,3 | 43,3 | 16,7 | 1,47 |
| | 6 | 79,8 | 42,9 | 20,2 | 1,40 |
| | 7 | 75,1 | 42,5 | 24,9 | 1,31 |
| DCD+GTH+ | 1 | 82,4 | 47,4 | 17,6 | 1,57 |
| Mn/MP | 2 | 83,5 | 47,3 | 16,5 | 1,58 |
| | 3 | 78,2 | 47,1 | 21,8 | 1,48 |
| | 4 | 75,1 | 46,6 | 24,9 | 1,41 |
| | 5 | 70,0 | 45,8 | 30,0 | 1,29 |
| | 6 | 58,4 | 45,3 | 41,6 | 1,07 |
| | 7 | 50,3 | 45,0 | 49,7 | 0,91 |

Tabelle 8 dient dem Nachweis, daß die erfindungsgemäßen Kombinationen in ihrer Wirksamkeit der Zweierkombination überlegen sind.

Tabelle 8:

| Vergleich der Wirksamkeit der erfindungsgemäßen Mittel mit den ent- sprechenden Zweierkombinationen | | |
|---|---|---|
| Kombination | Mischungsverhältnis | WF |
| DCD + GTH + MP | 4 | **1,55** |
| DCD + GTH | 4/1 | 1,09 |
| DCD + MP | 4/2 | 1,27 |
| GTH + MP | 4/3 | 1,12 |
| DCD + TH + MP | 4 | **1,43** |
| DCD + TH | 4/1 | 1,04 |
| DCD + MP | 4/2 | 1,27 |
| TH + MP | 4/3 | 0,88 |
| DCD + ATS + MP | 4 | **1,72** |
| DCD + ATS | 4/1 | 1,01 |
| DCD + Mp | 4/2 | 1,27 |
| ATS + MP | 4/3 | 0,96 |
| DCD + AR + MP | 4 | **1,65** |
| DCD + AR | 4/1 | 0,92 |
| DCD + MP | 4/2 | 1,27 |
| AR + MP | 4/3 | 0,97 |
| DCD + GTH + GMPxNO$_3$ | 4 | 2,20 |
| DCD + GTH | 4/1 | 1,08 |
| DCD + GMPxNO$_3$ | 4/2 | 1,32 |
| GTH + GMPxNO$_3$ | 4/3 | 1,20 |
| DCD + GTH + Mn/MP | 4 | 1,41 |
| DCD + GTH | 4/1 | 1,08 |
| DCD + GMPxNO$_3$ | 4/2 | 1,32 |
| GTH + GMPxNO$_3$ | 4/3 | 1,20 |

**EP 0 746 536 B1**

**Patentansprüche**

1. Wirkstoffkombinationen zur Hemmung bzw. Regelung der Nitrifikation von Ammoniumstickstoff in Kulturböden und Substraten, dadurch gekennzeichnet, dass sie als Wirkstoffkomponenten

   (a) mindestens ein substituiertes Pyrazol, dessen Salze oder Metallkomplexe (P) und
   (b) Dicyandiamid (DCD) und
   (c) mindestens eine der folgenden Verbindungen (X)
      Ammoniumthiosulfat
      Biguanid
      Ammoniumrhodanid
   enthalten, wobei das Mischungsverhältnis von DCD:X zwischen 4:1 und 1:4 liegt und das Mischungsverhältnis von (DCD+X):P 75:1 bis 1:1 beträgt.

2. Verfahren zur Hemmung bzw. Regelung der Nitrifikation mit einer Wirkstoffkombination nach Anspruch 1, dadurch gekennzeichnet, dass die Wirkstoffkombination als Lösung, Spritzpulver, Suspensions- oder Emulsionskonzentrat mit einer Aufwandmenge von mindestens 1 kg/ha Aktivsubstanz ausgebracht wird.

3. Verfahren nach Anspruch 2, dadurch gekennzeichnet, dass die Wirkstoffkombination gemeinsam mit festen und flüssigen amid- und/oder ammoniumhaltigen Düngemitteln in einer Menge von mindestens 0,5 Gew.-%, bezogen auf den Gehalt an reduziertem Stickstoff des Düngemittels, eingesetzt wird.

4. Verfahren nach den Ansprüchen 2 und 3, dadurch gekennzeichnet, dass die Wirkstoffkombination gemeinsam mit Pflanzenschutz- und Schädlingsbekämpfungsmitteln, pflanzlichen Wachstumsregulatoren oder Bodenverbesserungsmitteln appliziert wird.

**Claims**

1. Active ingredient combinations for inhibiting or controlling the nitrification of ammonium nitrogen in culture media and substrates, characterised in that they contain as active ingredient components

   (a) at least one substituted pyrazole, its salts or metal complexes (P) and
   (b) dicyandiamide (DCD) and
   (c) at least one of the following compounds (X)
      ammonium thiosulphate
      biguanide
      ammonium rhodanide
   wherein the mixing ratio of DCD:X lies between 4:1 and 1:4 and the mixing ratio of (DCD + X):P is 75:1 to 1:1.

2. Process for inhibiting or controlling nitrification with an active ingredient combination according to claim 1, characterised in that the active ingredient combination is applied as a solution, wettable powder, suspension or emulsion concentrate at an applied quantity of at least 1 kg/ha of active substance.

3. Process according to claim 2, characterised in that the active ingredient combination is used together with solid and liquid amide-containing and/or ammonium-containing fertilisers in a quantity of at least 0.5 wt.%, based on the content of reduced nitrogen in the fertiliser.

4. Process according to claims 2 and 3, characterised in that the active ingredient combination is applied together with plant-protection agents and pest-control agents, plant-growth regulators or soil conditioners.

**Revendications**

1. Combinaisons de principes actifs utilisées pour inhiber ou réguler la nitrification d'azote ammoniacal dans des sols cultivables et des substrats caractérisées en ce qu'elles contiennent à titre de composant à principes actifs

   (a) au moins un pyrazol substitué, ses sels ou complexes métalliques (P), et

(b) du dicyandiamide (DCD), et

(c) au moins l'un des composés (X) suivants :

      thiosulfate d'ammonium

      biguanide

      rhodanide d'ammonium

      le rapport de mélange DCD:X étant compris dans la plage allant de 4:1 à 1:4 et le rapport de mélange (DCD+X):P étant compris dans la plage allant de 75:1 à 1:1.

2.    Procédé pour inhiber ou réguler la nitrification avec une combinaison à principes actifs selon la revendication 1, caractérisé en ce que la combinaison à principes actifs est fournie sous forme de solution, de poudre de pulvérisation, de concentré en suspension ou en émulsion, avec une quantité appliquée d'au moins 1 kg/ha de substance active.

3.    Procédé selon la revendication 2, caractérisé en ce que la combinaison à principes actifs. est utilisée conjointement avec des engrais solides et liquides, contenant des amides et/ou de l'ammonium, en une quantité d'au moins 0,5 % en poids, en se référant à la teneur en azote réduit de l'engrais.

4.    Procédé selon les revendications 2 et 3, caractérisé en ce que la combinaison à principes actifs est appliquée conjointement avec des produits de protection des végétaux et de lutte contre les parasites, des régulateurs de croissance végétaux ou des produits d'amélioration des sols.